# EUROPEAN PATENT SPECIFICATION

(11) **EP 1 502 900 B1**
(45) Date of publication and mention of the grant of the patent: **15.11.2006**
(21) Application number: 04017690.1
(22) Date of filing: 26.07.2004
(51) Int. Cl.: C03C 3/16, C03C 3/19, C03C 3/21, C03C 8/08, C08K 3/00, C08K 3/32, C08K 3/40

(54) **Complex flame retardant and thermoplastic resin composition containing it**
Komplexer Flammhemmer und thermoplastische Harzzusammensetzung auf der Basis desselben
Ignifuges complexes et composition de résine thermoplastique a base d'ignifuges complexes

(30) Priority: 28.07.2003 JP 2003280868
(43) Date of publication of application: 02.02.2005
(73) Proprietor: Asahi Glass Company, Limited, Chiyoda-ku, Tokyo 100-8405 (JP); Asahi Fiber Glass Company, Limited, Tokyo 101-0045 (JP)
(72) Inventor: Nakagawa, Hideki, Chiyoda-ku Tokyo (JP); Endou, Hideki, Chiyoda-ku Tokyo (JP)
(74) Representative: Müller-Boré & Partner Patentanwälte

(56) References cited:
- EP-A- 0 414 110
- EP-A- 0 604 074
- EP-A- 0 643 097
- WO-A-02/057195
- US-A- 4 145 330
- US-A- 5 013 782

## Description

The present invention relates to a complex flame retardant. Particularly, it relates to a complex flame retardant which is capable of imparting excellent flame retardancy to a thermoplastic resin composition and further capable of improving the moldability of such a resin composition, and a thermoplastic resin composition containing it.

A thermoplastic resin composition is excellent in moldability and is widely used as a material to obtain molded products of various shapes. However, many thermoplastic resins are usually readily flammable and poor in flame retardancy, whereby the useful range of molded products is substantially limited. Under the circumstances, various flame retardants have been developed to improve the flame retardancy of thermoplastic resin compositions. Usually, a metal hydroxide utilizing an endothermal effect during dehydration, such as aluminum hydroxide or magnesium hydroxide; a compound containing halogen atoms such as bromine atoms or chlorine atoms, represented by decabromodiphenyl ether or chlorinated paraffin; or a metal oxide particularly effective for suppressing smoke generation at the time of combustion, such as molybdenum oxide, is used. Further, it is also known that a phosphorus type compound represented by a phosphoric ester, ammonium polyphosphate or red phosphorus, shows a flame retardancy. It is reported that a phosphorus type compound becomes polyphosphoric acid at the time of combustion and thereby covers the combustion surface or has an action to carbonize a resin by a dehydration action.

From the viewpoint of an environmental problem, it should better be avoided to use a resin containing chlorine atoms or bromine atoms or a resin having incorporated a halogen type flame retardant containing chlorine atoms or bromine atoms. Accordingly, attention has been drawn to a phosphorus type compound as a flame retardant containing no halogen. However, a phosphorus type compound decomposes in a range of from about 350 to 450°C and thus has had a problem that it is inferior in the flame retardancy in many cases within a temperature range of at least 450°C.

Further, low melting point glass forms a vitreous coating film on the surface of a molded product at the time of heating and thus has a function to shield oxygen, and it is expected to have a function as a flame retardant. U.S. Patent 4,544,695 discloses that low melting point glass comprising a sulfate is effective, but such glass has a problem in water resistance and is therefore not practically useful. Whereas, JP-A-09-003335 and JP-A-10-101364 disclose that phosphate type glass containing a sulfate is highly effective for suppressing smoke generation at the time of combustion of a vinyl chloride resin. However, such phosphate type glass is low melting point glass primarily intended to provide the effect for suppressing smoke generation, and its effect is not clearly understood to a resin containing no chlorine, for which it is not primarily required to provide the effect for smoke suppression. Further, JP-A-2001-64036 and JP-A-2001-64524 disclose a phosphate type glass showing high flame retardancy against a thermoplastic resin, while maintaining practical water resistance. However, such phosphate type glass includes glass having a glass transition temperature exceeding 400°C or glass having a glass transition temperature of lower than 300°C, whereby there has been a case where it is difficult to impart sufficient flame retardancy to a resin which undergoes decomposition in a temperature range of from about 300 to 400°C.

Further, European Patent Publication No. 0643097 discloses a polyether sulfone resin composition which has a high content of low melting point glass and which exhibits high moisture resistance. While it is excellent in moisture resistance, there has been a case where non-dispersed low melting point glass is present in a molded product of such a resin composition. JP-A-2001-335684 discloses a polycarbonate type resin composition containing low melting point glass and showing a high flame retardancy. However, although it is excellent in flame retardancy, there has been a case where non-dispersed glass is present in a molded product of such a resin composition.

WO-A-02/057195 describes tin-free zinc phosphate glass compositions with a low melt-to-melt glass transition temperature and glass/polymer blends containing the same. US-patent 5,013,782 describes a resin composition comprising a chlorine-containing resin, and (a) a metal-containing inorganic solid powder containing inorganic solid powder containing at least 30% by weight of phosphorus as P₂O₅ and (b) at least one flame- and fire-retardant agent selected from hydroxides and oxides or metals belonging to Groups II to V of the periodic table. EP-A-0 604 074 describes blends of low molecular weight PBT and high molecular weight polyester resin, such as high molecular weight PBT resin, with additional phosphorus-containing compounds. EP-A-0 414 110 describes an impact resistant and flame retardant polymer composition, a slab-like rectangular solid made of said composition, and a composite laminate article having at least one layer of said composition. US-patent 4,145,330 describes flame retardant thermoplastic compositions containing polypivalolactone resin, an inorganic phosphate, and optionally a fiberglass and a polybrominated aromatic compound.

It is an object of the present invention to solve the above-mentioned problems relating to a specific thermoplastic resin and to provide a complex flame retardant which is capable of imparting excellent flame retardancy to such a thermoplastic resin and which is excellent in the dispersibility in such a thermoplastic resin thereby to avoid non-dispersion, and a thermoplastic resin composition containing such a complex flame retardant.

The present invention provides the following to solve the above problems. A complex flame retardant having a phosphate type glass and a phosphorus type flame retardant other than the phosphate type glass complexed, wherein the blend proportions of the phosphate type glass and the phosphorus type flame retardant are such that the phosphorus type flame retardant is within a range of from 2 to 240 parts by mass per 100 parts by mass of the phosphate type glass, wherein the shape of the complex flame retardant is a pellet shape having an average long diameter of from 500 µm to 5 mm or a particle shape having an average particle diameter of from 500 µm to 5 mm, and wherein the phosphate type glass has a glass transition temperature higher than 300°C and lower than 400°C, wherein the phosphate type glass has a composition comprising, as represented by mol%, from 20 to 27% of P₂O₅, from 10 to 55% of ZnO, from 0 to 15% of RO (wherein R is a bivalent metal) other than ZnO, from 5 to 35% of R'₂O (wherein R' is a monovalent alkali metal), from 1 to 5% of Al₂O₃, from 8 to 20% of B₂O₃ and from 3 to 20% of SO₃, as its components.

The above complex flame retardant wherein the phosphate type glass is a phosphate type glass having the surface preliminarily treated.

The above complex flame retardant wherein the phosphorus type flame retardant other than the phosphate type glass, is at least one member selected from the group consisting of a monomer type phosphoric ester type flame retardant and a condensed type phosphoric ester type flame retardant.

A thermoplastic resin composition which comprises a thermoplastic resin containing no halogen atom and the above complex flame retardant, in an amount of from 0.1 to 50 parts by mass per 100 parts by mass of the thermoplastic resin.

A process for producing a thermoplastic resin composition which comprises melt-mixing a thermoplastic resin containing no halogen atom and the above complex flame retardant, in an amount of from 0.1 to 50 parts by mass per 100 parts by mass of the thermoplastic resin.

The above complex flame retardant of the present invention is capable of imparting excellent flame retardancy to a thermoplastic resin, and when incorporated into a thermoplastic resin composition, it is capable of suppressing non-dispersion of the flame retardant. Namely, by complexing a phosphate type glass and a phosphorus type flame retardant other than the phosphate type glass, the dispersibility into a thermoplastic resin can be improved, and the flame retardancy can be increased, and the flame retardancy can be provided with an amount smaller than the amount of a conventional phosphorus type flame retardant. If the phosphate type glass and the phosphorus type flame retardant are merely used together and incorporated to a thermoplastic resin without being complexed, the dispersibility in the thermoplastic resin tends to be poor, and the surface appearance of the obtained molded product is likely to be poor.

The complex flame retardant of the present invention is a complex flame retardant having a phosphate type glass and a phosphorus type flame retardant other than the phosphate type glass complexed, wherein the blend proportions of the phosphate type glass and the phosphorus type flame retardant are such that the phosphorus type flame retardant is within a range of from 2 to 240 parts by mass per 100 parts by mass of the phosphate type glass.

If the blend proportion of the phosphorus type flame retardant is less than 2 parts by mass, the superiority of complexing the phosphate type glass and the phosphorus type flame retardant tends to be lost, whereby the effect for flame retardancy to a thermoplastic resin tends to decrease. On the other hand, if it exceeds 240 parts by mass, the effect for flame retardancy to a thermoplastic resin may be obtained, but the cost of the complex flame retardant will be high, and the range of its application will be limited. Further, in a case where a phosphoric ester type phosphorus type flame retardant is employed, it tends to serve as a plasticizer to some thermoplastic resins, and if the amount is substantial, there will be a problem that the heat resistance of such resins will be poor. Further, the blend proportion of the above phosphorus type flame retardant is preferably within a range of from 5 to 150 parts by mass, more preferably within a range of from 65 to 150 parts by mass.

Further, the complex flame retardant in the present invention is employed in a pellet shape or a particle shape which is free from stickiness on the surface of the complex flame retardant from such a viewpoint that the dispersibility in a thermoplastic resin is good. In the case of a pellet shape, its long side is within a range of from 500 µm to 5 mm. In the case of a particle shape, its average particle diameter is within a range of from 500 µm to 5 mm.

### Phosphate type glass

The phosphate type glass in the present invention is a phosphate type glass having a relatively low melting point and being capable of functioning as a flame retardant for resins, and its glass transition temperature is higher than 300°C and lower than 400°C. If the glass transition temperature is too low, the glass tends to melt by a heat when the resin component of a thermoplastic resin composition burns, whereby although flame retardancy is obtainable at a low temperature, in a high temperature range, the viscosity of the glass tends to be low, and the glass tends to flow, whereby the coating film of the glass tends to be hardly formed, and consequently, the effect for flame retardancy or suppression of smoke generation tends to be poor. On the other hand, if the glass transition temperature is too high, melting of the glass by a heat when the resin component of a thermoplastic resin composition burns, tends to be difficult, whereby the coating film of the glass tends to be hardly formed at the time of the combustion, and consequently, the effect for flame retardancy or suppression of smoke generation tends to be poor. The phosphate type glass of the present invention is a phosphate glass of a composition comprising, as represented by mol%, from 20 to 27% of P₂O₅, from 10 to 55% of ZnO, from 0 to 15% of RO (wherein R is a bivalent metal) other than ZnO, from 5 to 35% of R'₂O (wherein R' is a monovalent alkali metal), from 1 to 5% of Al₂O₃, from 8 to 20% of B₂O₃ and from 3 to 20% of SO₃, as its components. Further, within a range not impair the effect of the present invention, it may contain an oxide of a metal such as Sr, Ti, Fe, Co, Ni, Cu, Zr, Mo or the like, as a component other than the above components.

The form of the phosphate type glass in the present invention is not particularly limited, and it may take various forms such as a pellet form, a grain form, a powder form, a fiber form, etc. However, a powder form is preferred. In the case of a powder form, the contact area with the resin will be large whereby the glass tends to readily melt to form a glass coating film at the time of combustion, and consequently, the effect to impart flame retardancy will be secured. In this respect, the average particle diameter is preferably within a range of from 0.1 to 20 µm, particularly preferably within a range of from 0.5 to 10 µm.

It is preferred that the phosphate type glass in the present invention is preliminarily surface-treated, whereby the adhesion of the phosphate type glass and the thermoplastic resin will be improved when the phosphate type glass and the thermoplastic resin are kneaded to form a thermoplastic resin composition or when such a thermoplastic resin composition is molded. If the adhesion of the phosphate type glass and the thermoplastic resin is inadequate, a space will be formed at their interface, and this space tends to hinder melting of the phosphate type glass to form a glass coating film at the time of combustion, and consequently, the effect to impart flame retardancy tends to be inadequate, and it is important to prevent such a drawback. Further, in handling the phosphate type glass, formation of static electricity can be suppressed, whereby the handling efficiency can be improved. Otherwise, surface treatment may be applied to the phosphate type glass to improve the adhesion between the phosphate type glass and the phosphorus flame retardant other than the phosphate type glass, and at the time of dispersing it into a thermoplastic resin, the phosphate type glass and the phosphorus type flame retardant will be dispersed together, and consequently, there may be a case where the flame retardancy will be improved.

Further, the surface treatment to the phosphate type glass, may be before complexing it with the phosphorus type flame retardant other than the phosphate type glass or at the same time as such complexing, and it is substantially unlikely that by the presence of the above phosphorus type flame retardant, the adhesion between the phosphate type glass and the thermoplastic resin deteriorates.

As the surface treating agent for the surface treatment, a coupling agent, a film former, a lubricant or an antistatic agent may, for example, be mentioned. These surface treating agents may be used alone or in combination as a mixture of a plurality of them.
Further, such a component contained in the surface treating agent may suitably be selected depending upon the type of the thermoplastic resin to be used. The amount of the surface treating agent to be applied to the phosphate type glass is preferably from 0.1 to 5.0 mass% as a solid content based on the mass of the phosphate type glass after application. If the applied amount is less than 1 mass%, it tends to be difficult to adequately improve the adhesion with the resin and the handling efficiency to handle the glass or to adequately protect the phosphate type glass. On the other hand, if the applied amount is larger than 5.0 mass%, dispersion of the phosphate type glass into the thermoplastic resin tends to deteriorate.

As the above coupling agent, a silane coupling agent, a borane coupling agent or a titanate coupling agent may, for example, be used. It is particularly preferred to employ a silane coupling agent, whereby the adhesion between the thermoplastic resin and the phosphate type glass will be good. As such a silane coupling agent, an aminosilane coupling agent, an epoxysilane coupling agent or a methacryloxy-silane coupling agent may, for example, be used. Among such silane coupling agents, it is particularly preferred to employ an aminosilane coupling agent, whereby the adhesion between the phosphate type glass and at least one thermoplastic resin selected from the group consisting of a polycarbonate resin, a polyphenylene ether resin, a polystyrene resin and an acrylonitrile/butadiene/styrene copolymer resin, will be good.

As the above-mentioned film former, a polymer such as a vinyl acetate resin, an urethane resin, an acrylic resin, a polyester resin, a polyether resin, a phenoxy resin, a polyamide resin, an epoxy resin or a polyolefin, or a modified product thereof, may be used. As the above-mentioned lubricant, a surfactant of an aliphatic ester type, an aliphatic ether type, an aromatic ester type or an aromatic ether type may be used. As the above antistatic agent, an inorganic salt such as lithium chloride or potassium iodide, or a quaternary ammonium salt such as an ammonium chloride type or an ammonium ethosulfate type, may be used.

### Phosphorus type flame retardant

As the phosphorus type flame retardant other than the phosphate type glass (hereinafter referred to simply as the phosphorus type flame retardant) in the present invention, a phosphoric ester type flame retardant, a halogenated phosphoric ester type flame retardant, a polyphosphate type flame retardant or a red phosphorus type flame retardant may, for example, be mentioned. As the phosphorus type flame retardant, a phosphorus type flame retardant not containing halogen atoms such as chlorine atoms or bromine atoms, is preferred. As the phosphoric ester type flame retardant, a monomer type phosphoric ester type flame retardant such as triphenyl phosphate (TPP), or a condensed phosphoric ester type flame retardant such as 1,3-phenylenebis(diphenylphosphate) or bisphenol A-bis(diphenylphosphate) (BADP) may be mentioned. As the polyphosphate type flame retardant, ammonium polyphosphate (APP) or melamine polyphosphate (MPP) may, for example, be mentioned. As the halogenated phosphoric ester type flame retardant, tris(chloroethyl) phosphate may, for example, be mentioned. It is particularly preferred to employ at least one phosphorus type flame retardant selected from the group consisting of a monomer type phosphoric ester type flame retardant and a condensed phosphoric ester type flame retardant, since the flame retardancy is thereby excellent. As the monomer type phosphoric ester type flame retardant, in addition to the above, bis(nonylphenyl)phenyl phosphate or tri(isopropylphenyl) phosphate may, for example, be mentioned, and as the condensed phosphoric ester type flame retardant, in addition to the above, 1,3-phenylenebis(dixylenyl phosphate) or bisphenol A-bis(dicresylphosphate) may, for example, be mentioned. As a phosphorus type flame retardant which is solid at room temperature, 1,3-phenylenebis(dixylenyl phosphate) is particularly preferred.

The phosphorus type flame retardant may be liquid or solid, or both may be used in combination. Further, it is preferred to incorporate a phosphorus type flame retardant having a melting point of at most 150°C, which is solid at least at room temperature, since it can readily be complexed with the phosphate type glass. Such a phosphorus type flame retardant which is solid at room temperature, preferably has a melting point within a range of from 40 to 120°C, most preferably has a melting point within a range of from 60 to 120°C. It is also preferred to use such a phosphorus type flame retardant which is solid at room temperature and a phosphorus type flame retardant which is liquid at room temperature, in combination. In such a case, the proportion of the phosphorus type flame retardant which is solid at room temperature, is preferably at least 30 mass%, particularly preferably at least 50 mass%, based on the total amount of both.

### Process for producing the complex flame retardant

The process for producing the complex flame retardant of the present invention will be described. The phosphate type glass and the phosphorus type flame retardant are uniformly mixed by means of a mixing machine to obtain the complex flame retardant. In a case where the phosphorus type flame retardant which is solid at room temperature, is to be used, it is preferred that both materials are melt-kneaded under such a temperature condition that the phosphorus type flame retardant is liquid, to obtain a uniform composite flame retardant. The complex flame retardant thereby obtained is solid and in the form of pellets or particles. It is particularly preferred that as the phosphate type glass, one in a powder form is used, and as the phosphorus type flame retardant, one which is solid at room temperature is used, and both materials are uniformly melt-kneaded under such a temperature condition that the phosphorus type flame retardant is in a liquid state, and then formed into a pellet shape or a particle shape to obtain a solid complex flame retardant.

As the mixing machine, a common one such as a Henschel mixer, a ball mill, a Banbury mixer or a Loedige mixer may be employed. In a case where a phosphorus type flame retardant which is solid at room temperature, is used, the obtained mixture is then melt-kneaded. Here, the mixture is heated to melt the phosphorus type flame retardant by a kneading machine such as an extruder or a heat roll mill to uniformly disperse other solid components thereby to complex the phosphate type glass and the phosphorus type flame retardant. The melt-kneading temperature is preferably a temperature of at least the melting point of the phosphorus type flame retardant and lower than the glass transition temperature of the phosphate type glass and lower than 200°C. it is particularly preferred to carry out the mixing at a temperature of from 60 to 150°C. Then, it is solidified while being cooled and formed into a pellet shape, etc. to obtain a desired complex flame retardant. Further, the complex flame retardant formed into a pellet shape may be pulverized by means of a pulverizer such as a jet mill or a roll mill to obtain a complex flame retardant of a particle shape.

Further, in a case where a phosphorus type flame retardant which is solid at room temperature and which has a melting point of at most 150°C, is to be used, such a phosphorus type flame retardant is preliminarily put into a kneader and heated to a temperature of at least the melting point to obtain a liquid having a low viscosity. To such a liquid phosphorus type flame retardant, solid components such as the phosphate type glass, may be added and uniformly dispersed by kneading thereby to complex the phosphate type glass and the phosphorus type flame retardant.

### Thermoplastic resin

The thermoplastic resin containing no halogen atom in the present invention is a thermoplastic resin which does not substantially have halogen atoms such as chlorine atoms or bromine atoms in its polymer structure. As such a thermoplastic resin, a so-called engineering plastic having high heat resistance, is preferred. Such an engineering plastic is a resin which is used for applications to electric components and which is required to have high flame retardancy. Such a resin is highly flammable, and if a flame retardant is incorporated in a large amount, the mechanical properties of the resin can hardly be maintained. Accordingly, the effect for flame retardancy by the present invention will be obtained distinctly with such a resin.

The thermoplastic resin containing no halogen atom in the present invention is preferably at least one thermoplastic resin selected from the group consisting of a polycarbonate resin, a polyphenylene ether resin, a polystyrene resin, an acrylonitrile/butadiene/styrene copolymer resin, an aromatic polyester resin, a polyamide resin, a polyarylate resin, a polyphenylene sulfide resin, a polysulfone resin, a polyether sulfone resin, a polyether ether ketone resin and a polyether imide resin. A particularly preferred thermoplastic resin containing no halogen atom is at least one thermoplastic resin selected from the group consisting of a polycarbonate resin, a polyphenylene ether resin, a polystyrene resin and an acrylonitrile/butadiene/styrene copolymer resin.

In the present invention, a preferred thermoplastic resin may be a mixture of these resins. For example, it may be a mixture of a polyphenylene ether resin and a polystyrene resin. Further, such a thermoplastic resin may contain a small amount of monomer units other than the main monomer units in its polymer structure. For example, a polystyrene resin may be a polystyrene resin having butadiene units. Further, such a thermoplastic resin may be a mixture of a main resin with a small amount of other thermoplastic resins. The proportion of such other monomer units or other resins is less than 50 mass%, preferably at most 30 mass%, based on the total thermoplastic resins.

As other thermoplastic resins useful as mixed with a preferred thermoplastic resin in the present invention, thermoplastic resins containing no halogen atoms are preferred. Such other thermoplastic resins may, for example, be a polyolefin resin such as a polyethylene resin or a polypropylene resin, a polymethylmethacrylate resin, a polyvinyl acetate resin, a polyethylene oxide resin, a polyvinyl ether resin, a polyvinyl alcohol resin and a thermoplastic urethane resin.

The form of the thermoplastic resin containing no halogen atom (hereinafter referred to simply as a thermoplastic resin) of the present invention, is not particularly limited, and various forms such as a pellet form, a particle form, a powder form and a fiber form may be employed. Further, the above thermoplastic resin may contain a thermoplastic resin composition obtained by recycling a molded product obtained by molding a thermoplastic resin composition.

### Composition

The thermoplastic resin composition of the present invention comprises 100 parts by mass of a thermoplastic resin and from 0.1 to 50 parts by mass of a complex fire retardant having a phosphate type glass and a phosphorus type flame retardant other than the phosphate type glass complexed. Further, the amount of the complex fire retardant is preferably from 0.5 to 20 parts by mass. Particularly to a thermoplastic resin having a relatively low flammability such as a polycarbonate resin, adequate flame retardancy can be accomplished even when it is incorporated in an amount of from 0.5 to 10 parts by mass.

It is preferred that the thermoplastic resin composition of the present invention further contains an antidripping agent in addition to the complex flame retardant. Such an antidripping agent is incorporated for the purpose of providing a function to prevent a thermoplastic resin softened and melted at the time of combustion from flowing and dripping. As such an antidripping agent, a fluorine resin is mainly employed. Such a fluorine resin may, for example, be polymonofluoroethylene, polychlorotrifluoroethylene, polytetrafluoroethylene (hereinafter referred to as PTFE), polyvinylidene fluoride, a tetrafluoroethylene/hexafluoropropylene copolymer, a tetrafluoroethylene/perfluoro(alkyl vinyl ether) copolymer or an ethylene/tetrafluoroethylene copolymer. It is particularly preferred to employ PTFE, since it is excellent in the antidripping performance with a small amount. The amount of the antidripping agent is preferably from 0.05 to 2 parts by mass per 100 parts by mass of the thermoplastic resin. If it is less than 0.05 part by mass, no adequate antidripping effect can be obtained, and if it exceeds 2 parts by mass, the mechanical strength of the resin composition tends to deteriorate, or the fluidity tends to deteriorate.

Further, to the thermoplastic resin composition of the present invention, a coupling agent, a film former, a lubricant or an antistatic agent may, for example, be incorporated separately from one contained in the above-mentioned surface treating agent for the phosphate type glass, and various other additives such as a stabilizer and a slipping agent may further be incorporated. As such additives, a coupling agent such as a silane coupling agent, a plasticizer such as a phthalic ester, a slipping agent such as a stearic acid derivative, an antioxidant such as a hindered phenol, a heat stabilizer such as an organic tin compound, an ultraviolet absorber such as a benzotriazole compound, a colorant such as a pigment, an antistatic agent such as a surfactant, a filler such as calcium carbonate, or a reinforcing agent such as glass fiber, may, for example, be optionally employed.

Further, in order to further improve the flame retardancy, a flame retardant other than the phosphorus type flame retardant may be added. As such a flame retardant, a metal hydroxide flame retardant such as magnesium hydroxide, aluminum hydroxide, a metal oxide flame retardant such as antimony tetraoxide, molybdenum oxide, tin oxide (SnO) or zinc oxide (ZnO), a bromine type flame retardant such as decabromodiphenyl ether or tribromophenylallyl ether, a chlorine type flame retardant such as chlorinated paraffin, may, for example, be mentioned. As such a flame retardant, a metal hydroxide type flame retardant or a metal oxide type flame retardant is preferred, and it is preferred not to substantially use a bromine type flame retardant or a chlorine type flame retardant. Further, it is preferred that such an additive is preliminarily incorporated to the resin component.

By using the complex flame retardant of the present invention, the dispersibility in the thermoplastic resin composition will be improved, and the flame retardancy of the resin composition will be improved, as compared with a case where the phosphate type glass and the phosphorus type flame retardant are added in the respective independent forms to the thermoplastic resin. If they are respectively independently used, the flame retardancy will be poor, and dispersion failure in the molding step will be observed. Further, in the case of a thermoplastic resin containing at least a polycarbonate resin, particularly remarkable effects can be obtained by using the complex flame retardant of the present invention.

The thermoplastic resin composition of the present invention can be produced by melt-mixing the thermoplastic resin, the complex flame retardant comprising the phosphate type glass and the phosphorus type flame retardant, and other additives which may be incorporated as the case requires. It is particularly preferred to produce the composition as a molding material by the same method as a conventional method for producing a thermoplastic resin composition by e.g. melting simultaneously with mixing (for example melt-kneading) or by melt kneading after mixing. It is particularly preferred to melt and knead the above respective components, followed by extrusion molding to obtain a pellet form or particle-form molding material. The form of the thermoplastic resin composition of the present invention as the molding material, is not particularly limited, and various forms such as a pellet-form, a particle-form or a powder-form may be employed.

Particularly preferred is a pellet-form or a particle form.

The thermoplastic resin composition of the present invention which is a molding material, can be molded by various methods in the same manner as conventional thermoplastic resin compositions to obtain molded products. As such molding methods, press molding, extrusion molding, calender molding, injection molding and pultrusion may, for example, be mentioned. By such molding methods, the thermoplastic resin composition of the present invention in the form of molded products can be obtained. Further, without via the thermoplastic resin composition of the present invention which is a molding material, the thermoplastic resin and the complex flame retardant, and further other additives which may be added as the case requires, may be melt-mixed in a molding machine such as an injection molding machine or an extrusion molding machine, and such a molten mixture may be molded to directly obtain the thermoplastic resin composition of the present invention which is a molded product.

Molded products may be for electronic applications such as a coating material for electric wires, a housing material for electric products, a sealing material for semiconductors and a substrate for printed circuit boards or for applications to vehicles represented by interior components such as a sheet cushion, a door panel, a front panel and a rear panel. Further, roof-related components such as a roof, an eaves and a rain gutter, exterior wall components such as a siding material, a deck material and a fence material, opening related components such as a window frame, a door and a gate door, interior related components such as a wall material, a floor material, a ceiling material, a crown, a casing, a baseboard, a staircase, a handrail and a heat insulating material, other building components or building articles, furnitures, disaster prevention troughs, signboards, etc. may be mentioned.

### EXAMPLES

Now, the present invention will be described in detail, but the present invention is by no means restricted thereto.

Various evaluation methods will be shown below.

For the glass transition temperature, glass cullet pulverized into a predetermined particle diameter was subjected to the measurement, and by means of a differential thermal analyzer (DTA), the measurement was carried out at a heating rate of 10°C/min in a nitrogen atmosphere. In the DTA curve, the temperature at the shoulder of the first endothermic portion was taken as the glass transition temperature.

With respect to the test for the flame retardancy, in accordance with UL94 standards and using test specimens having a width of 12.7 mm, a length of 127 mm and a thickness of 1.6 mm, the vertical combustion test was carried out 5 times with respect to test specimens of the same composition. The afterflame periods of five times were totaled to obtain the total afterflame time (seconds), and a case wherein the total afterflame time exceeded 250 seconds, was rated "not measurable". On the basis of the evaluation standards of the above-mentioned standards, evaluation was carried out with four rankings of V-0, V-1, V-2 and out of standards (not corresponding to any one of V-0, V-1 and V-2).

Evaluation of the dispersibility was made by evaluating the number of non-dispersed particles of at most 1 mm visually observed in a square of 1 cm × 1 cm of a specimen having a thickness of 3.2 mm. Δ: more than 50 particles (non-dispersion substantial), ○: 20 to 50 particles (non-dispersion observed) ⊚ less than 20 particles (non-dispersion little).

### Preparation of phosphate glass

Glass materials were mixed and melted and then solidified to prepare a glass cullet, so that the glass composition would be, as represented by mol percentage, 4.1% of Li₂O, 5.7 % of Na₂O, 4.4% of K₂O, 24.9% of P₂O₅, 9.3% of SO₃, 40.5% of ZnO, 1.5% of Al₂O₃ and 9.6% of B₂O₃. The cullet was pulverized and sieved to obtain a powdery phosphate glass having an average particle diameter of 3.6 µm. The glass transition temperature of the glass was measured and found to be 354°C. To this phosphate type glass, a monoaminosilane coupling agent was deposited in an amount of 2.0 mass% as a solid content, based on the mass of the glass after the deposition, to obtain a surface-treated phosphate type glass (PG1).

### EXAMPLE 1

### Preparation of a complex flame retardant

As a phosphorus type flame retardant, 100 parts by mass of 1,3-phenylenebis(dixylenyl phosphate) (RDP, manufactured by Daihachi Chemical Industry Co., Ltd., melting point: 95°C) was put into a stainless steel heat resistant container and heated to 120°C to obtain a low viscosity liquid, and 100 parts by mass of the surface treated phosphate type glass (PG1) was added thereto and mixed, and then cooled to room temperature for solidification. The solidified flame retardant was pulverized to obtain a particle form complex flame retardant (FR1) having an average particle diameter of 2 mm, as Example 1.

### EXAMPLE 2

A particle form complex flame retardant (FR2) having an average particle diameter of 2 mm was obtained as Example 2, in the same manner as in Example 1 except that as the phosphorus flame retardant, 60 parts of 1,3-phenylenebis(dixylenyl phosphate) (RDP, manufactured by Daihachi Chemical Industry Co., Ltd., melting point: 95°C) and 40 parts by mass of bisphenol A-bis(diphenylphosphate) (BADP, manufactured by Daihachi Chemical Industry Co., Ltd., liquid at room temperature) were used.

The complex flame retardants of Examples 1 and 2 are free from stickiness among particles and can be uniformly mixed at the time of preparation of thermoplastic resin compositions.

### EXAMPLE 3

### Preparation of thermoplastic resin composition

100 parts by mass of a polycarbonate resin (PC: LEXAN 121R, manufactured by GE Plastics Japan Ltd.), 2 parts by mass of the complex flame retardant (FR1) and 0.5 part by mass of PTFE (average particle diameter: 475 µm, manufactured by Asahi Glass Company, Limited) as an antidripping agent, were preliminarily mixed and then melt-kneaded by means of a twin screw extruder having the cylinder temperature set at 260°C to obtain a pellet-form thermoplastic resin composition. The pellets were dried at 120°C for 5 hours and then molded by means of an injection molding machine at a cylinder temperature of 290°C and a mold temperature of 105°C to obtain a test specimen as Example 3.

### EXAMPLE 4

A test specimen of a molded product of a thermoplastic resin composition as Example 4 was obtained in the same manner as in Example 3 except that the formulation was changed as shown in Table 1.

### COMPARATIVE EXAMPLES 1 to 5

Test specimens of molded products of thermoplastic resin compositions of Comparative Examples 1 to 5 were obtained in the same manner as in Example 3 except that the formulation was changed as shown in Table 2.

**Table 1**

| | Example 3 | Example 4 |
|---|---|---|
| Formulation (parts by mass) | | |
| PC | 100 | 100 |
| FR1 | 2 | |
| FR2 | | 2 |
| PTFE | 0.2 | 0.2 |

**Table 2**

| | Comp. Ex. 1 | Comp. Ex. 2 | Comp. Ex. 3 | Comp. Ex. 4 | Comp. Ex. 5 |
|---|---|---|---|---|---|
| Formulation (parts by mass) | | | | | |
| PC | 100 | 100 | 100 | 100 | 100 |
| PG1 | 1 | | | 1 | 1 |
| RDP | | 1 | | 1 | |
| BADP | | | 1 | | 1 |
| PTFE | 0.2 | 0.2 | 0.2 | 0.2 | 0.2 |

With respect to these seven types of test specimens, tests for flame retardancy and evaluation of the dispersibility were carried out, and the evaluation results are shown in Tables 3 and 4.

**Table 3**

| | Example 3 | Example 4 |
|---|---|---|
| UL94 standards | | |
| Total afterflame time (seconds) | 20 | 22 |
| Evaluation | V-0 | V-0 |
| Dispersibility | ⊚ | ⊚ |

**Table 4**

| | Comp. Ex. 1 | Comp. Ex. 2 | Comp. Ex. 3 | Comp. Ex. 4 | Comp. Ex. 5 |
|---|---|---|---|---|---|
| UL94 standards | | | | | |
| Total afterflame time (seconds) | 45 | 48 | 40 | 37 | 32 |
| Evaluation | V-1 | V-1 | V-1 | V-0 | V-0 |
| Dispersibility | Δ | ○ | ○ | ○ | ○ |

It is evident that in Examples 3 and 4 wherein a flame retardant having a phosphate type glass and a phosphorus type flame retardant complexed, was used, non-dispersed substance is little, the total afterflame time under UL94 standards is short at a level of from 20 to 22 seconds, and the flame retardancy is excellent.

In Comparative Example 1 wherein only a phosphate type glass was incorporated, or in Comparative Example 2 or 3 wherein only a phosphorus type flame retardant was incorporated, non-dispersed substance is observed, the total afterflame time is long, and no adequate flame retardancy can be obtained.

It is evident that in Comparative Example 4 or 5 wherein a phosphate type glass and a phosphorus type flame retardant are used together, non-dispersed substance is observed, and although flame retardancy at a level of V-0 under UL94 standards is observed, the total afterflame time is longer than Examples 3 or 4 at a level of from 32 to 37 seconds, and thus the flame retardancy is poor.

The complex flame retardant of the present invention is useful as a flame retardant to be incorporated to various types of thermoplastic resins including a thermoplastic resin containing no halogen atoms, or to thermosetting resins. The thermoplastic resin composition of the present invention is useful as a molding material to obtain various types of molded products. As a molded product, the thermoplastic resin composition of the present invention is useful for applications to electronic or electric related components, vehicle related components, etc., and further, it is useful for applications to roof related components, opening-related components, other building components, etc.

The entire disclosure of Japanese Patent Application No. 2003-280868 filed on July 28, 2003 including specification, claims and summary is incorporated herein by reference in its entirety.

## Claims

1. A complex flame retardant having a phosphate type glass and a phosphorus type flame retardant other than the phosphate type glass complexed, wherein the blend proportions of the phosphate type glass and the phosphorus type flame retardant are such that the phosphorus type flame retardant is within a range of from 2 to 240 parts by mass per 100 parts by mass of the phosphate type glass,
wherein the shape of the complex flame retardant is a pellet shape having an average long diameter of from 500 µm to 5 mm or a particle shape having an average particle diameter of from 500 µm to 5 mm, and
wherein the phosphate type glass has a glass transition temperature higher than 300°C and lower than 400°C, wherein the phosphate type glass has a composition comprising, as represented by mol%, from 20 to 27% of P₂O₅, from 10 to 55% of ZnO, from 0 to 15% of RO (wherein R is a bivalent metal) other than ZnO, from 5 to 35% of R'₂O (wherein R' is a monovalent alkali metal), from 1 to 5% of Al₂O₃, from 8 to 20% of B₂O₃ and from 3 to 20% of SO₃, as its components.

2. The complex flame retardant according to Claim 1, wherein the phosphate type glass is a phosphate type glass having the surface preliminarily treated.

3. The complex flame retardant according to Claim 1 or 2, wherein the phosphorus type flame retardant other than the phosphate type glass, is a phosphorus type flame retardant which is solid at room temperature and has a melting point of at most 150°C.

4. The complex flame retardant according to any one of Claims 1 to 3, wherein the phosphorus type flame retardant other than the phosphate type glass, is at least one member selected from the group consisting of a monomer type phosphoric ester type flame retardant and a condensed type phosphoric ester type flame retardant.

5. A process for producing the complex flame retardant as defined in any one of Claims 1 to 4, which comprises mixing a powder of a phosphate type glass and a phosphorus type flame retardant other than the phosphate type glass under the condition of a temperature lower than the glass transition temperature of the phosphate type glass and at least the melting point of the phosphorus type flame retardant, and then forming the mixture into pellets or a powder.

6. The process for producing the complex flame retardant according to Claim 5, wherein the powder of the phosphate type glass and the phosphorus type flame retardant are mixed at a temperature of from 60 to 150°C and at least the melting point of the phosphorus type flame retardant.

7. A thermoplastic resin composition which comprises a thermoplastic resin containing no halogen atom and the complex flame retardant as defined in any one of Claims 1 to 4, in an amount of from 0.1 to 50 parts by mass per 100 parts by mass of the thermoplastic resin.

8. A process for producing a thermoplastic resin composition which comprises melt-mixing a thermoplastic resin containing no halogen atom and the complex flame retardant as defined in any one of Claims 1 to 4, in an amount of from 0.1 to 50 parts by mass per 100 parts by mass of the thermoplastic resin.

## Patentansprüche

1. Komplexes Flammschutzmittel mit einem Phosphat-Typ-Glas und einem komplexierten, vom Phosphat-Typ-Glas verschiedenen Phosphor-Typ-Flammschutzmittel, wobei die Mischungsanteile des Phosphat-Typ-Glases und des Phosphor-Typ-Flammschutzmittels derart sind, daß das Phosphor-Typ-Flammschutzmittel innerhalb eines Bereiches von 2 bis 240 Massenteile pro 100 Massenteile des Phosphat-Typ-Glases ist, wobei die Form des komplexen Flammschutzmittels eine Pelletform mit einem mittleren Längsdurchmesser von 500 µm bis 5 mm oder eine Teilchenform mit einem mittleren Teilchendurchmesser von 500 µm bis 5 mm ist, und wobei das Phosphat-Typ-Glas eine Glasübergangstemperatur höher als 300°C und niedriger als 400°C aufweist, wobei das Phosphat-Typ-Glas eine Zusammensetzung aufweist, umfassend, dargestellt in mol%, von 20 bis 27% P₂O₅, von 10 bis 55% ZnO, von 0 bis 15% von ZnO verschiedenes RO (wobei R ein zweiwertiges Metall ist), von 5 bis 35% R'₂O (wobei R' ein einwertiges Alkalimetall ist), von 1 bis 5% Al₂O₃, von 8 bis 20% B₂O₃ und von 3 bis 20% SO₃, als seine Komponenten.

2. Komplexes Flammschutzmittel nach Anspruch 1, wobei das Phosphat-Typ-Glas ein Phosphat-Typ-Glas mit einer vorher behandelten Oberfläche ist.

3. Komplexes Flammschutzmittel nach Anspruch 1 oder 2, wobei das vom Phosphat-Typ-Glas verschiedene Phosphor-Typ-Flammschutzmittel ein Phosphor-Typ-Flammschutzmittel ist, welches bei Raumtemperatur fest ist und einen Schmelzpunkt von höchstens 150°C aufweist.

4. Komplexes Flammschutzmittel nach einem der Ansprüche 1 bis 3, wobei das vom Phosphat-Typ-Glas verschiedene Phosphor-Typ-Flammschutzmittel mindestens ein Vertreter, ausgewählt aus der Gruppe, bestehend aus einem Monomer-artigen Phosphorsäureester-Typ-Flammschutzmittel und einem kondensiert-artigen Phosphorsäureester-Typ-Flammschutzmittel, ist.

5. Verfahren zum Herstellen eines komplexen Flammschutzmittels nach einem der Ansprüche 1 bis 4, welches das Mischen eines Pulvers eines Phosphat-Typ-Glases und eines von dem Phosphat-Typ-Glas verschiedenen Phosphor-Typ-Flammschutzmittels, unter der Bedingung einer niedrigeren Temperatur als der Glasübergangstemperatur des Phosphat-Typ-Glases und mindestens dem Schmelzpunkt des Phosphor-Typ-Flammschutzmittels, und anschließend das Bilden des Gemisches in Pellets oder ein Pulver, umfaßt.

6. Verfahren zum Herstellen des komplexen Flammschutzmittels nach Anspruch 5, wobei das Pulver des Phosphat-Typ-Glases und des Phosphor-Typ-Flammschutzmittels bei einer Temperatur von 60 bis 150°C und mindestens dem Schmelzpunkt des Phosphor-Typ-Flammschutzmittels gemischt werden.

7. Thermoplastische Harzzusammensetzung, welche ein thermoplastisches Harz umfaßt, welches kein Halogenatom und das komplexe Flammschutzmittel nach einem der Ansprüche 1 bis 4 in einer Menge von 0,1 bis 50 Massenteile pro 100 Massenteile des thermoplastischen Harzes enthält.

8. Verfahren zum Herstellen einer thermoplastischen Harzzusammensetzung, welches das Schmelzmischen eines thermoplastischen Harzes, welches kein Halogenatom und das komplexe Flammschutzmittel nach einem der Ansprüche 1 bis 4 in einer Menge von 0,1 bis 50 Massenteile pro 100 Massenteile des thermoplastischen Harzes enthält, umfaßt.

## Revendications

1. Agent ignifuge complexe comportant un verre de type phosphate et un retardateur de flamme de type phosphore autre que le verre de type phosphate complexé, dans lequel les proportions de mélange du verre de type phosphate et de l'agent ignifuge de type phosphore sont telles que l'agent ignifuge de type phosphore se situe dans une plage de 2 à 240 parties en masse pour 100 parties en masse du verre de type phosphate, dans lequel la forme de l'agent ignifuge complexe est une forme de pastille dont le long diamètre moyen est compris entre 500 µm et 5 mm ou une forme de particule dont le diamètre moyen est compris entre 500 µm et 5 mm, et dans lequel la température de transition vitreuse du verre de type phosphate est supérieure à 300°C et inférieure à 400°C, dans lequel le verre de type phosphate a une composition, exprimée en % molaires, de 20 à 27% de P₂O₅, de 10 à 55% de ZnO, de 0 à 15% de RO (où R est un métal bivalent) autre que ZnO, de 5 à 35% de R'₂O (où R' est un métal alcalin monovalent), de 1 à 5% de Al₂O₃, de 8 à 20% de B₂O₃ et de 3 à 20% de SO₃, en tant que ses composants.

2. Agent ignifuge complexe selon la revendication 1, dans lequel le verre de type phosphate est un verre de type phosphate dont la surface est préalablement traitée.

3. Agent ignifuge complexe selon la revendication 1 ou 2, dans lequel l'agent ignifuge de type phosphore autre que le verre de type phosphate est un agent ignifuge de type phosphore qui est solide à la température ambiante et possède un point de fusion d'un maximum de 150°C.

4. Agent ignifuge complexe selon l'une quelconque des revendications 1 à 3, dans lequel l'agent ignifuge de type phosphore, autre que le verre de type phosphate, est au moins un membre choisi dans le groupe formé par un agent ignifuge de type ester phosphorique de type monomère et un agent ignifuge de type ester phosphorique de type condensé.

5. Procédé de production de l'agent ignifuge complexe tel que défini dans l'une quelconque des revendications 1 à 4, comprenant le mélange d'une poudre de verre de type phosphate et d'un agent ignifuge de type phosphore autre que le verre de type phosphate à une température inférieure à la température de transition vitreuse du verre de type phosphate et au moins au point de fusion de l'agent ignifuge de type phosphore, puis le formage du mélange en pastilles ou en poudre.

6. Procédé de production de l'agent ignifuge complexe selon la revendication 5, dans lequel la poudre du verre de type phosphate et l'agent ignifuge de type phosphore sont mélangés à une température de 60 à 150°C et au moins au point de fusion de l'agent ignifuge de type phosphore.

7. Composition de résine thermoplastique comprenant une résine thermoplastique ne contenant pas d'atome d'halogène et l'agent ignifuge complexe tel que défini dans l'une quelconque des revendications 1 à 4, en une quantité de 0,1 à 50 parties en masse pour 100 parties en masse de la résine thermoplastique.

8. Procédé de production d'une composition de résine thermoplastique comprenant le mélange, à l'état fondu, d'une résine thermoplastique ne contenant pas d'atome d'halogène et de l'agent ignifuge complexe tel que défini dans l'une quelconque des revendications 1 à 4, en une quantité de 0,1 à 50 parties en masse pour 100 parties en masse de la résine thermoplastique.
